# EUROPEAN PATENT SPECIFICATION

(11) **EP 3 502 925 B1**
(45) Date of publication and mention of the grant of the patent: **07.06.2023**
(21) Application number: 17209553.1
(22) Date of filing: 21.12.2017
(51) Int. Cl.: G06F 16/951, G06F 16/958

(54) **COMPUTER SYSTEM AND METHOD FOR EXTRACTING DYNAMIC CONTENT FROM WEBSITES**
COMPUTERSYSTEM UND VERFAHREN ZUR EXTRAKTION VON DYNAMISCHEM INHALT VON WEBSITES
SYSTÈME INFORMATIQUE ET PROCÉDÉ POUR EXTRAIRE UN CONTENU DYNAMIQUE À PARTIR DE SITES WEB

(43) Date of publication of application: 26.06.2019
(73) Proprietor: Urban Software Institute GmbH, 09116 Chemnitz (DE)
(72) Inventor: Bittner, Christopher, 10717 Berlin (DE); Müller, Sebastian, 10717 Berlin (DE)
(74) Representative: Bittner, Peter

(56) References cited:
- CN-A- 102 880 607
- US-A1- 2006 190 561
- US-A1- 2017 220 681

## Description

### Technical Field

The present invention generally relates to systems for data retrieval, and more particularly, relates to methods, computer program products and systems for extracting dynamic content from websites in machine-readable format.

### Background

Web scraping or web data extraction methods are known in the art. Web scraping is used to access the World Wide Web directly using the Hypertext Transfer Protocol, or through a web browser. Web scraping typically refers to automated processes implemented using a bot or web crawler. It is a form of copying, in which specific data is gathered and copied from the web, typically into a central local database or spreadsheet, for later retrieval or analysis.

Web scraping a web page involves retrieving a predefined Hypertext Markup Language (HTML) page and extracting data from it. Fetching is the downloading of a page which is stored under a static Web address typically specified by a Uniform Resource Locator (URL). Once the page is fetched from where it had been stored, extraction can take place. The content of a page may then be parsed, searched, reformatted, etc. Web scrapers typically extract certain parts of a page to make use of it for another purpose. An example is to find and copy names and phone numbers, or companies and their URLs, to a list (so-called contact scraping).

Prior art Web scraping tools can retrieve web page content from pages which are stored as predefined HTML data. Such content is referred to as static content herein because it relates to content provided by static web pages. As an example, US patent application US2017220681 (A1) discloses an automated extensible scraping script which is generated for web scraping that is extensible to a plurality of domains. Web sites are classified based on common extracted domain data, further clustering the data based on common navigation structures, and using such commonalities to automate the generation of scraping code based on predefined and reusable code snippets for specific parts of the web sites. That is, the script is automatically generated based on a navigation model which limits the generated script to extract only the exact content that is defined within the script. US patent application US2006190561 (A1) discloses a method for obtaining script related information for website crawling and addresses the problem of parsing static script code embedded in a web page to extract URL information which has been coded in a JavaScript that is part of the HTML code of the web page for checking URLs which are generated via embedded script code. However, current web technology allows to dynamically generate web pages on a web server in response to requests which may be received from a user or a computer system. As a consequence, data shown on websites can continuously change. A web page containing respective data can change its layout and new data fields may be introduced at any time. The content of such dynamic web pages (dynamic content) typically depends on the navigation history through a website. In other words, it depends on where the user currently is and which information and requests have been sent previously. Current Web scraping tools fail to scrape dynamic content data from such dynamically generated web pages and provide respective content data in a machine-readable format so that the content can be further processed by other computer systems provided with the extracted data.

### Summary

Hence, there is a need for providing improved methods and systems to enable web scraping for dynamic content on dynamic web pages.

This technical problem is solved by a computer system, a computer-implemented method and a computer program product as disclosed in the independent claims. The disclosed embodiments define a screen-scraping framework which addresses the above problem by automatically connecting to a target website and extracting dynamic data from said target website. The scope of the invention is defined by the appended claims.

In one embodiment, a computer system is provided for extracting dynamic content data from a website in a machine-readable format. Dynamic content data relates to content data which is generated by the server in response to a request. The system includes an interface to receive configuration data reflecting the structure of the website. The configuration data includes at least a website specific scraping script and one or more website specific XPath statements with the scraping script(s) and XPath statements being predefined (e.g., by a user). The computer system can then deploy the received configuration data to respective modules of the computer system. Such modules will be explained in detail in the following description. Further, the interface receives a data retrieval request specifying the website and corresponding dynamic content data to be retrieved from the website. The data retrieval request may be received from a human user or it may be received from another computer system requiring the to-be-retrieved data for further processing. In the latter case it is advantageous to provide the retrieved data in a machine-readable format.

The computer system further has a scraper module to provide the predefined scraping script to a script module of the system for triggering its execution on the website. The scraping script is configured in such a way that it allows to perform one or more parameterized navigation steps on the website to access the dynamic content. In other words, the scraping script has instructions which allow to automatically perform parameterized navigation steps by emulating a browser accessing the website. Each step description of the scraping script may include placeholders (parameters) which may be either replaced with data received from a human user or another computer system via the data retrieval request, or with values of responses extracted from previous navigation steps. That is, the scraping script may use results from preceding server responses allowing for dynamic navigation through the website and enabling the script to work without relying on predefined URLs. The screen scraper can be seen as a central module controlling at least the script module and the module for data extraction.

The script module triggers execution of the scraping script. In other words, the script module executes the steps as defined in the scraping script and triggers parameterized requests to the web server. In other words, the scraping script has a step description including one or more dynamic parameters with data from the data retrieval request specifying the dynamic content to be retrieved. Thereby, the data retrieval request specifying the dynamic content data includes one or more dynamic parameters of the scraping script that are replaced with values from preceding server responses extracted from previous navigation steps. The replaced one or more parameters are then used for the next navigation step. Further, one or more website specific XPath statements of the data retrieval request address said values. In response to the scraping script execution, the script module receives from the website HTML data or XML data representing the dynamic content data defined by the data retrieval request wherein the value of a particular dynamic parameter is the result value of a particular query.

The computer system further has an XPath extraction module which is pre-configured with the website specific XPath statements in accordance with the structure of the website. The HTML/XML data received by the script module can be directly provided to the XPath extraction module via the screen scraper. The XPath extraction module extracts machine-readable content data from the HTML/XML data. XPath (XML Path Language) is a query language for selecting nodes from an XML document. Further, XPath can be used to compute values (e.g., strings, numbers, or Boolean values) from the content of an XML document. Further, XPath can also be used for parsing HTML pages that have been previously transferred into XML documents. XPath uses a compact, non-XML syntax to facilitate use of XPath within XML attribute values and XML nodes. XPath operates on the abstract, logical structure of an XML document, rather than its surface syntax. As a consequence, XPath statements return structured data which is readable by computers.

In one embodiment, the computer system further has a request queue to buffer the data retrieval request amongst a plurality of further data retrieval requests. For example, the buffer can be implemented as a data storage structure which supports Piping and Queueing (FIFO-Buffer) or Stacking (LIFO-Buffer). Using a request queue allows to perform job scheduling for a plurality of data retrieval requests.

In one embodiment, the computer system further has a session management module. The session management module is useful in cases where the website requires login credentials. In this embodiment, the data retrieval request further specifies user authentication data which are necessary for a user to login to the website. The session management module can determine a session ID for the data retrieval request of the user to access the dynamic content data on the website. The interface is communicatively coupled with an account database. The account database can be an integral component of the computer system or it can be stored on a remote computer (e.g. a cloud server) which can be accessed by the computer system through standard network communication interfaces. The session management module can provide the authentication data to the account database. In case of successful authentication of the user, the session management module receives from the account database (via the interface) the login credentials for the authenticated user in response to a credential request. More details of this authentication process are disclosed in the detailed description.

The session management module can check if an open session is already available for the received data retrieval request. An open session, as used herein, refers to an active session which is already running. If an open session is available, it provides the session ID of the open session to the scraper module. The scraper and the script module can then make use of the existing session to trigger the execution of the predefined scraping script by using the existing session. If no open session is available for the received data retrieval request, the session management module can initiate (via the scraper) the execution of a pre-configured login script by the script module in accordance with the data retrieval request. As a response to the execution of the login script the website provides one or more cookies which are provided as the session ID to the scraper.

In one embodiment, a computer-implemented method is provided for extracting dynamic content data in a machine-readable format from a website provided by a server. Thereby, dynamic content data relates to content data which is generated by the server in response to a request. The method can be executed by the modules of the disclosed computer system. The method includes the steps: accessing configuration data reflecting the structure of the website, the configuration data including at least a website specific scraping script having instructions emulating a browser to automatically perform parameterized navigation steps on the website, and one or more website specific XPath statements (such configuration data may be generated by a user or by a machine); receiving, via an interface, a data retrieval request specifying the website and corresponding dynamic content data to be retrieved from the website; executing the scraping script wherein the scraping script is configured to perform one or more parameterized navigation steps on the website to access the dynamic content data using a step description including one or more dynamic parameters with data from the data retrieval request specifying the dynamic content to be retrieved; receiving, from the website in response to the scraping script execution, HTML/XML data representing the dynamic content data wherein the value of a particular dynamic parameter is the result value of a particular query; providing the HTML/XML data to an XPath extraction module, wherein the XPath extraction module is pre-configured with the website specific XPath statements in accordance with the structure of the website; and receiving, from the XPath extraction module, machine-readable content data extracted from the HTML/XML data. The machine-readable content data include the extracted dynamic content in a format which can be further processed by a machine. Thereby, the data retrieval request specifying the dynamic content data includes one or more dynamic parameters of the scraping script that are replaced with values from preceding server responses extracted from previous navigation steps, the replaced one or more parameters to be used for the next navigation step, and further including one or more website specific XPath statements addressing said values.

In one embodiment, the website requires login credentials and the data retrieval request further specifies user authentication data. In this embodiment, the method further includes the steps: providing the authentication data to an account database; and in case of successful authentication of the user, receiving from the account database the login credentials for the authenticated user in response to a credential request.

In a further embodiment with a login requirement for the website the method includes the further step: determining a session ID for the data retrieval request to access the dynamic content data on the website. Determining a session ID may further include: if an open session is available for the received data retrieval request, providing the session ID of the open session; if no open session is available for the received data retrieval request, executing a pre-configured login script in accordance with the data retrieval request, and receiving, in response to the executed login script, one or more cookies as the session ID.

In one embodiment, a computer program product is provided that, when loaded into a memory of a computing device and executed by at least one processor of the computing device, executes the steps of the computer-implemented method as disclosed herein.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 shows a simplified diagram of an embodiment of a computer system for extracting dynamic content data from a website into a machine-readable format;
FIG. 2A is a simplified flowchart of a computer-implemented dynamic content extraction method which can be performed by embodiments of the computer system;
FIG. 2B is a simplified flowchart of sub-steps for determining a session ID;
FIG. 3 is a swim lane diagram illustrating data flows between modules of a particular embodiment for extracting dynamic content data from a website in a machine-readable format;
FIGs. 4A to 4E illustrate coding portions of example implementations for configuration data including website specific scripts and website specific XPath statements according to an embodiment;
   and
FIG. 5 is a diagram that shows an example of a generic computer device and a generic mobile computer device, which may be used with the techniques described here.

### Detailed Description

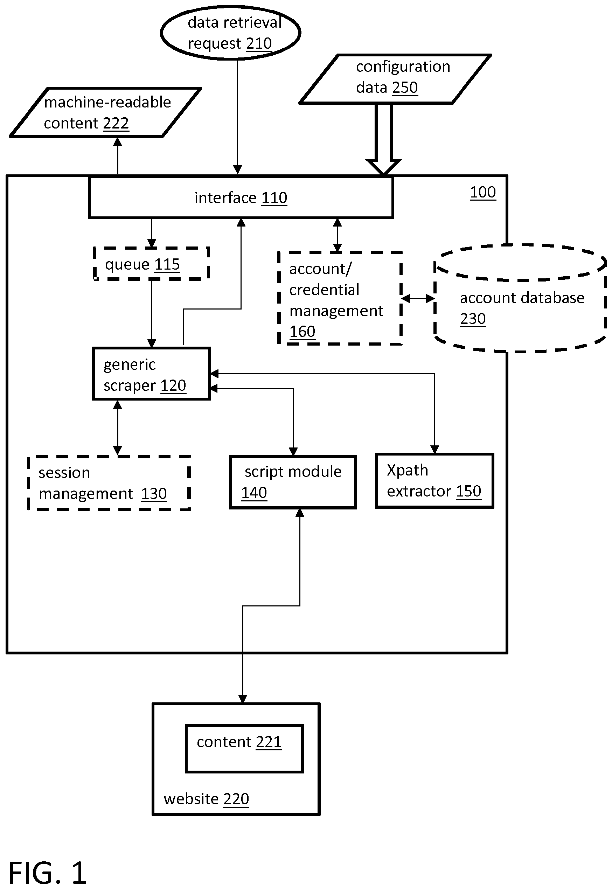

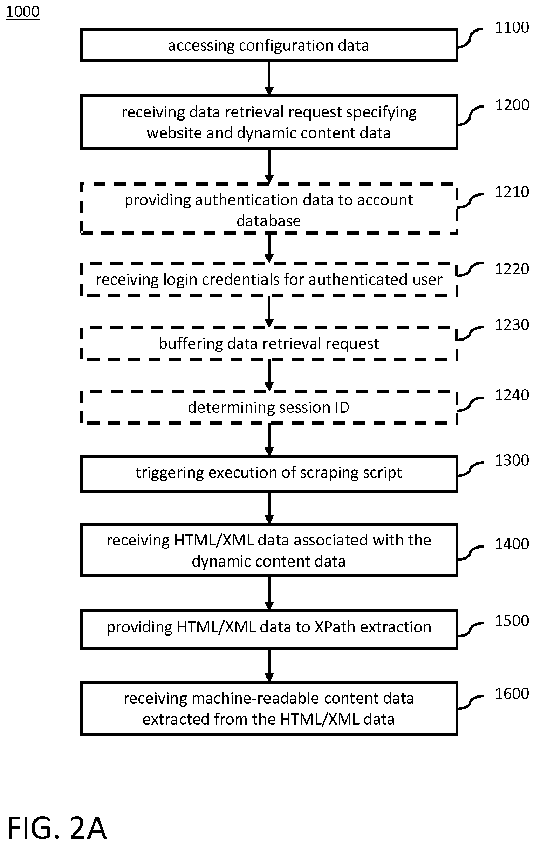

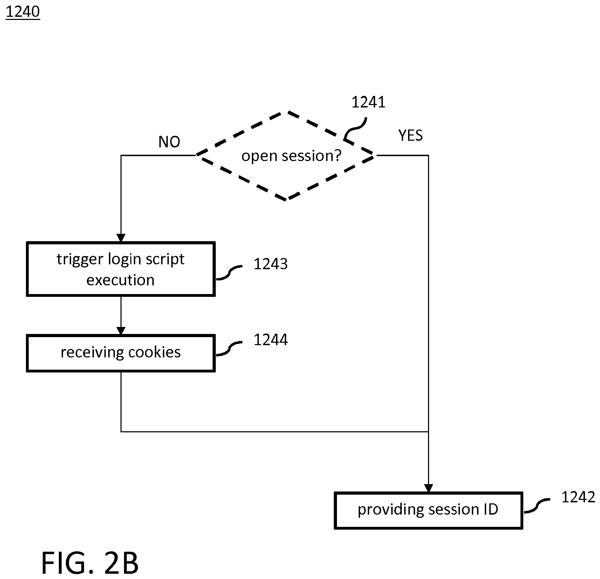

FIG. 1 shows a simplified diagram of an embodiment of a computer system 100 for extracting dynamic content data 221 from a website 220 in a machine-readable format. FIG. 1 is described in the context of FIG. 2 which is a simplified flowchart of a computer-implemented method 1000 which can be performed by embodiments of the computer system 100. Method steps illustrated by dashed boxes are optional steps of the method 1000. The following description of FIG. 1 in the context of FIG. 2 refers to reference numbers of both figures.

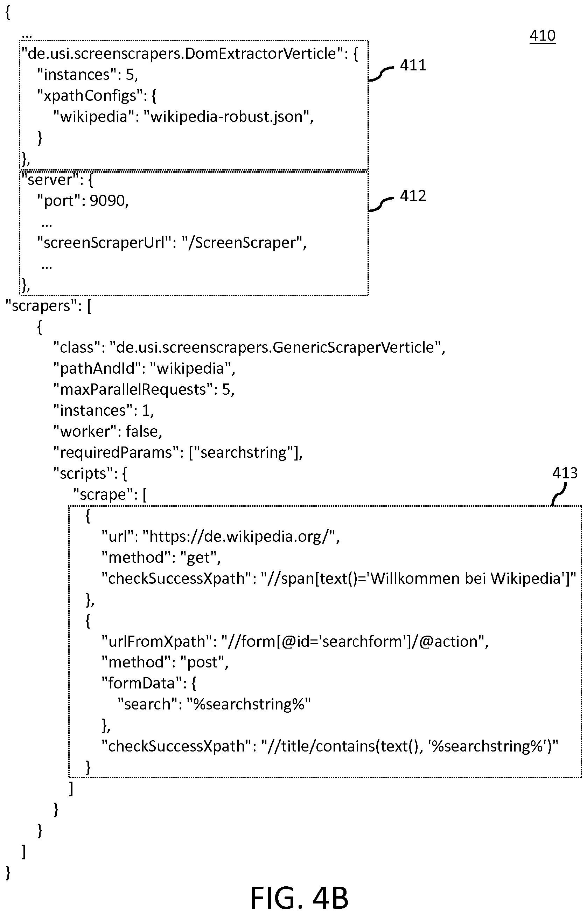

The computer system 100 has an interface 110 to access 1100 configuration data 250 reflecting the structure of the website 220. The configuration data 250 include at least a website specific scraping script and one or more website specific XPath statements. The website specific scraping script includes script statements which are configured to interact with the website, for example, by addressing a certain URL and defining methods to be performed on this URL. A detailed example of a scraping script is discussed in FIG. 4B. The website specific XPath statements are used for extracting data (in a machine-readable format) from HTML/XML data provided by the website in response to the execution of the scraping script.

Further, the interface receives 1200 a data retrieval request 210 specifying the website 220 and corresponding dynamic content data 221 to be retrieved. In other words, the data retrieval request specifies the parts of the website 220 which correspond to the data of interest of a requesting user or system. The data retrieval request 210 can be phrased by a user who wants to retrieve specific dynamic content data from the website and provide such data for further processing to a computer system. The data retrieval request may also be a machine generated request which is automatically composed by a computer system in accordance with respective generation rules. For example, the data retrieval request includes at least one dynamic parameter which leads to content 221 being generated by website 220. The value of the dynamic parameter is the result value of a particular query. This value is not known beforehand and may be subject to change with each new search query. For example, a dynamic parameter may be a value returned by a search result of a respective search query. This value is not known beforehand and is subject to change with each new search query. Thereby, the value is used as a parameter for the next navigation step (e.g., another search query with the returned result value as new parameter like for example a URL), for example, to retrieve more details with a corresponding follow-up request.

In an optional embodiment, the system 100 further has a request queue 115 which may be a memory component configured to buffer 1230 the received data retrieval request amongst a plurality of further data retrieval requests. The request queue 115 can be used for job scheduling of multiple data retrieval requests. Such a scheduling function may be part of the request queue. In other words, once multiple jobs are stored in the request queue, the system can process the data retrieval requests in a controlled order (e.g., FIFO or LIFO), or in parallel (if parallel processing is supported by the hardware of computer system 100). XPath statements do not need to be adapted as a consequence of addressing the respective values via XPath statements.

Some websites require authentication of the requesting user before allowing to access the dynamic content data. For such scenarios, in an optional embodiment, the computer system 100 includes account/credential management module 160 which is communicatively coupled with an account database 230. The account database 230 may be an internal component of the computer system 100 or it may be stored on a remote computer accessible through standard communication technology. Further, a session management module 130 is used.

In case the website 220 requires login credentials from the requesting entity the data retrieval request 210 further specifies user authentication data. The authentication data is then provided 1210 to the account database 230 via the account/credential management module 160. The account database 230 stores information about the users and respective credentials for accessing the website 220. In response to the authentication data the account database 230 provides a corresponding user to the interface 110. In a subsequent step, the interface launches a credential request for the received user via the account/credential management module 160. In case of successful authentication of the user this credential request is answered by the account database 230 with corresponding login credentials for the authenticated user. The login credentials are received 1220 by the interface 110 and provided to the session management module 130.

Turning briefly to FIG. 2B, the session management module 130 determines 1240 a session ID for the data retrieval request to access the dynamic content data on the website 220. For this purpose, a check 1241 is performed whether an open session is already available. If an open session is available for the received data retrieval request 210, the session management module 130 provides 1242 the respective session ID of the open session to the scraper 120 to be used for the execution of the scraping script. If no open session is available for the received data retrieval request, the scraper 120 provides a pre-configured login script to the script module 140. In this embodiment, the preconfigured login script is part of the configuration data initially received by computer system 100. The execution of the login script on the website is then triggered 1243 via the script module in accordance with the data retrieval request. In response to the executed login script, the script module receives 1244 one or more cookies as the session ID which is finally provided to the scraper. The one or more cookies can be stored in a respective cache memory.

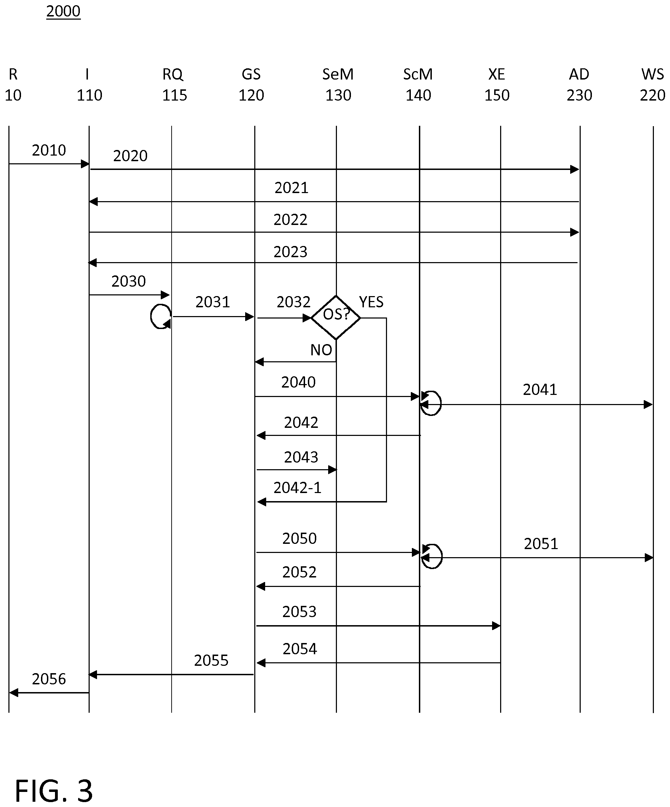

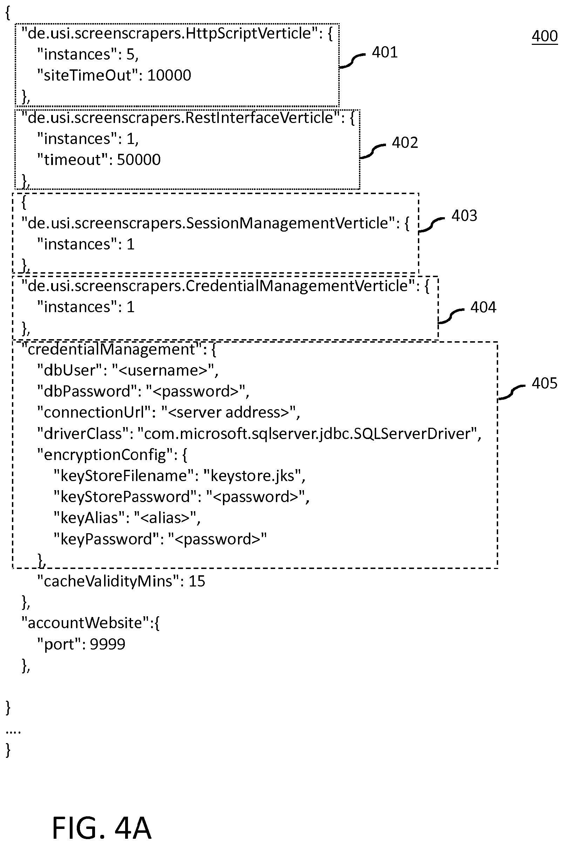

A detailed example embodiment is now described with FIG. 3. Code examples of FIGs. 4A to 4E illustrate specific code sections of a simplified JSON code example illustrating an implementation of the inventive approach to retrieve dynamic content data from the Wikipedia website. It is to be noted that this simple example is only used for explaining the concept. Very complex examples can be implemented by the inventive concept. Therefore, the shown example is not to be interpreted to be limiting the scope of protection. Rather, a person skilled in the art can apply the technical teaching of this example to very complex website structures with high benefit resulting from the high flexibility and robustness of the disclosed procedure.

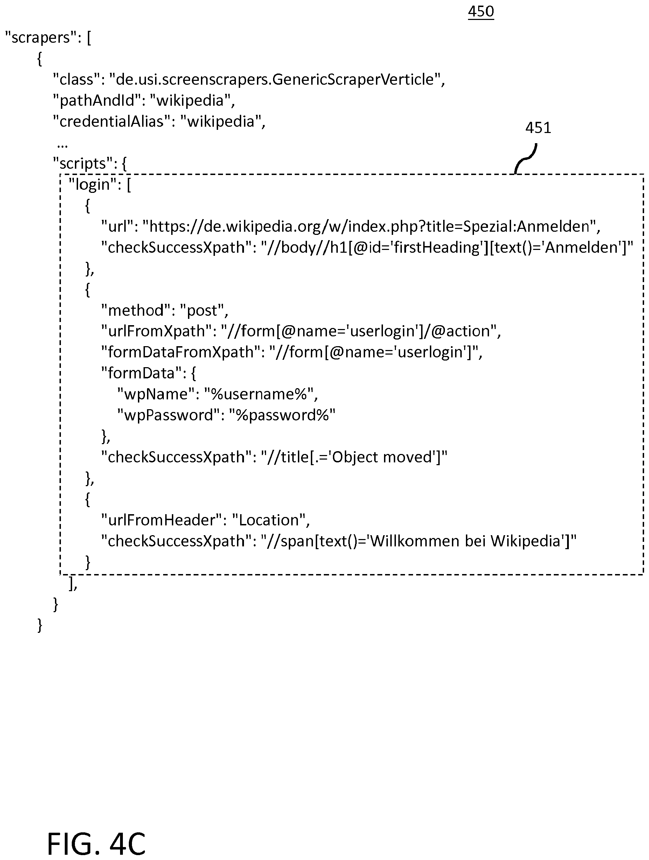

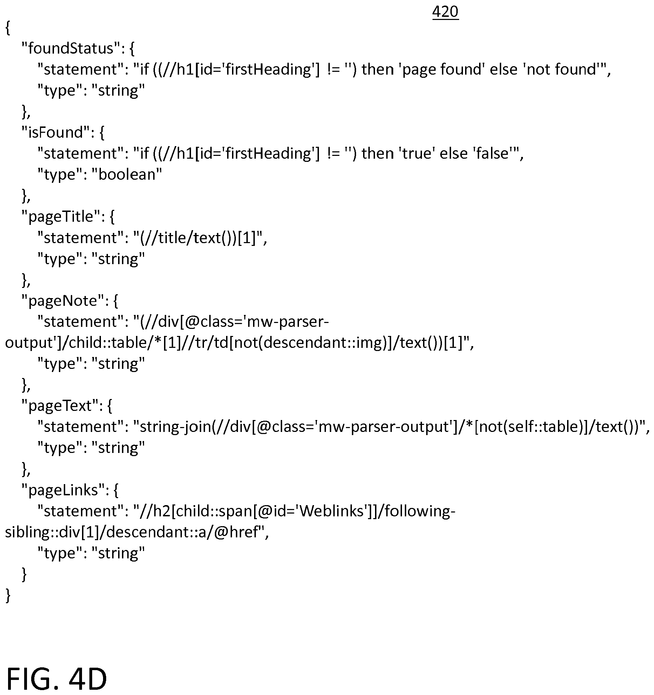

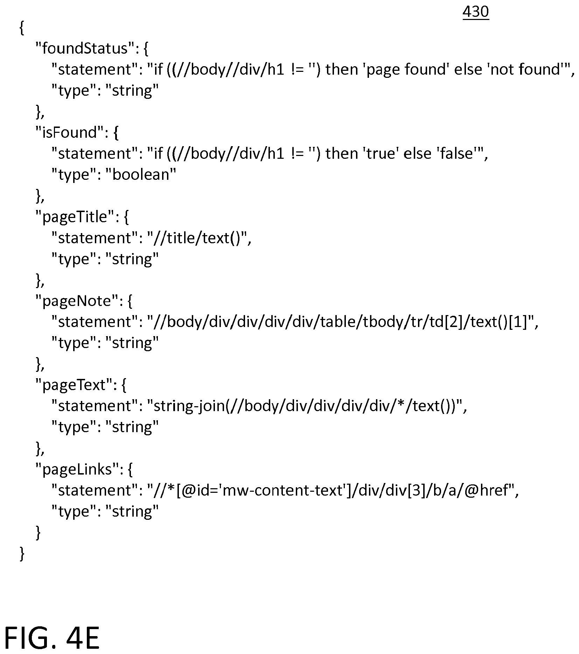

FIG. 3 is a swim lane diagram 2000 illustrating data flows between modules of a particular embodiment for extracting dynamic content data from a website in a machine-readable format. FIGs. 4A to 4F illustrate coding portions of example implementations for website specific scripts and website specific XPath statements according to an embodiment. FIG. 3 will be described in the context of the JSON code portions of FIG. 4*. Other data description languages (e.g., markup languages or data serialization languages, such as for example, XML, YAML or BSON) may be used by skilled person instead. In FIG. 3 the reference numbers of FIG. 1 are reused for the respective system modules.

The vertical bars of FIG. 3 represent the following entities: requesting entity R (10), interface I (110), request queue RQ (115), scraper GS (120), session module SeM (130), script module ScM (140), XPath extractor XE (150), account database AD (230), and website WS (220). It is to be noted that for the reason of simplicity the communication between the interface I and the account database AD is illustrated as a direct communication leaving out the account/credential management module which facilitates this communication as already explained in the description of FIG. 1. The vertical dimension of FIG. 3 can be interpreted as a time axis where time progresses top down. The horizontal arrows in FIG. 3 illustrate messages which are exchanged between the respective entities. The direction of each arrow indicates respective sender and recipient of the message.

The requesting entity R sends a data retrieval request 2010 to the interface I of the computer system. For example, interface I can be implemented as a REST interface. Representational state transfer (REST) or RESTful web services is a way of providing interoperability between computer systems on the Internet. REST-compliant Web services allow requesting systems to access and manipulate textual representations of Web resources using a uniform and predefined set of stateless operations. Other forms of Web services exist, which expose their own arbitrary sets of operations such as WSDL and SOAP. In a RESTful Web service, requests which are made to the unique resource indicator (URI) of a resource will elicit a response that may be in XML, HTML, JSON or some other defined format. The response may confirm that some alteration has been made to the stored resource, and it may provide hypertext links to other related resources or collections of resources. Using HTTP, the kind of operations available include those predefined by the HTTP verbs GET, POST, PUT, DELETE, and so on.

FIG. 4A illustrates a JSON example 400 which includes some coding sections to instantiate and configure some of the modules of the computer system. For example, section 402 can be used to instantiate the interface I as a REST interface and section 403 can be used to instantiate the session management module SeM.

In the embodiment of FIG. 3, it is assumed that the optional modules of FIG. 1 are included in the computer system. It is further assumed that the website of interest requires authentication. Therefore, data retrieval request includes authentication data. The authentication data is used in accordance with the description of FIG. 2B, to request 2020 user data from AD. When the requestor R (e.g., a user) issues a request to the interface I, he/she may need to authenticate via HTTP basic authentication. A lookup in the credential database can be used to verify that R is allowed to trigger a scraping process. If the authentication was successful, the credential management module furthermore provides the associated site credentials that will be used for logging in to the site that should be scraped if needed. In other words, if authentication via the account database is successful, AD sends a user ID 2021 to the interface I in accordance with the provided authentication data. In a second step, I sends a credential request 2022 for said user to AD. AD in turn provides login credentials 2023 in response to the request 2011. In the JSON example of FIG. 4, the optional account/credential management module (for managing the communication between the interface I and AD; not shown) is instantiated by section 404. Section 405 shows configuration for the credential management aspects. For example, it specifies username, password, server address and other configuration parameters such as, for example, the configuration for the AD access to the database or the configuration for the database encryption.

Upon successful triggering, the interface I can put 2030 the data retrieval request in the optional request queue RQ from which it gets consumed and forwarded to the configured scraper GS as soon as a new request to the site is allowed. For example, only a configurable number of maximum parallel requests may be allowed for each site in order to avoid too much load on the website WS from specific accounts. The forwarding of requests buffered in RS to GS is illustrated by the circular arrow.

When the GS receives a request 2031, it orchestrates the steps necessary for scraping the website WS. In case the WS requires a login, GS checks 2032 if there is already an active session available (open session "OS?") in the optional session management module SeM. If so (YES), the login process is skipped, and GS can directly proceed to the scraping process 2050 by providing the respective stored session cookie 2042-1. If not (NO), GS triggers the login to WS by invoking 2040 the script module ScM to trigger the execution of a respective login script. The login script is provided to GS during the deployment and configuration of the GS module. FIG. 4C shows a JSON example 450 with the login script 451 which is part of the scripts section of the GS instance 450. The login script includes a sequence of parametrized HTTP calls that are issued to the target website WS. For execution of the login script 451, ScM is instantiated via section 401 (cf. FIG. 4A). Upon successful execution 2041 of the login script on WS, WS provides one or more cookies as session ID back to ScM from where the provided cookie is forwarded 2042, 2043 to GS and SeM to be stored by the session management module SeM as a new session ID which can now be used by GS for future scraping. To provide feedback to R (e.g., the user) about the login process and to avoid massive re-login attempts, a built-in counter can capture failed attempts. The credential management module may show an alert associated with credentials that have an increased failure counter. This information can be used to avoid accounts being banned due to too many failed logins, and to inform the administrator(s) of the scraper to solve the login problem. Additionally, accounts can be thereby marked as broken, preventing them from being used in the future.

In situations where no login is required by WS, the steps 2020 to 2023 and 2040 to 2043 are not required. GS can proceed with the scraping script right upon the receipt of the data retrieval request 2031. FIG. 4B illustrates the predefined scraping script 413 in the scripts section of the scraper. The scraping script 413 is received via interface I as part of the configuration of the scraper and includes a sequence of parametrized HTTP calls that are executed through the ScM by navigating on the target website. In the example of the scraping script 413, the HTTP method "get" is used to call the URL https://de.wikipedia.org/. A successful call of the URL can be verified by a respective "checkSuccessXpath" statement. The required parameter "searchstring" is a potential user input in the data retrieval request specifying the dynamic content to be retrieved. This content can be hidden on the website in a form which may be placed anywhere on the website. By specifying the form via its ID "//form[@id='searchform']/@action" it can be quickly identified on the website no matter how nested the structure of WS may be. The "searchstring" is then sent 2051 to the server and the respective URL is called with the parameter "searchstring". The closing "checkSuccessXpath" statement is optional and checks whether the call was successful. This function provides a debugging opportunity in cases where the execution of the scraping was not successful and changes to the scripts may be necessary. The system can immediately localize where the scraping script has failed by using such "checkSuccessXpath" debugging statements. The scraping script can use results from preceding server responses. Therefore, a dynamic navigation through the website is possible, enabling the script to work without relying on predefined URLs. The result of the query is received 2052 by the screen scraper as HTML/XML data representing the dynamic content data.

Section 412 specifies the endpoint under which the screen scraper is accessible from outside the computer system. In this example the screen scraper is accessible via HTTP on port 9090. This interface can be used by a human user or equally by a machine.

To summarize, FIGs. 4A to 4C illustrate by way of example how the various modules of the computer system can be instantiated and configured. In particular, a scraping script example in FIG. 4B illustrates a predefined scraping script which is specific for retrieving dynamic content from the Wikipedia website. In an optional embodiment, the login script in FIC. 4C can be used to access the website based on authentication data provided with the data retrieval request when a login is required from the requesting entity R. Successful execution of the scraping script provides the respective HTML/XML data to the GS.

As explained earlier, besides such scripts the configuration data further includes one or more website specific XPath statements which are used to retrieve the requested dynamic content data in a machine-readable format (for further data processing) from the received HTML/XML data. FIG. 4D illustrates a JSON example with a set 420 of flexible and robust XPath statements which can be used for said purpose. FIG. 4E illustrates an example set 430 of XPath statement which can provide the same result as the set of FIG. 4D but being less robust. The main difference is that in set 420 navigation occurs through identifiers only, where in set 430 the navigation occurs via specific structure elements of target website. Once the structure is slightly modified (e.g., by moving a structure element or by insertion/deletion of structure elements, the set 430 will fail to retrieve the requested data while the set 420 will still provide the correct result.

Turning back to FIG. 3, the GS provides 2053 the HTML/XML data to the XPath extraction module XE. There, the HTML/XML data is cleaned (e.g., using the library htmlcleaner available at htmlcleaner.sourceforge.net) and parsed into a DOM tree. The XE is instantiated in section 411 of the example in FIG. 4B. The configuration of the XPath extraction module in this example refers to the file "wikipedia-robust.json" which corresponds to the set 420 of FIG. 4D. That is, the XPath extraction module is pre-configured with the website specific XPath statements in accordance with the logical structure of the website WS, as for example illustrated by the set 420. The XPath statements point to respective locations within the HTML/XML data contents with the respective information. XE applies the website specific XPath statements to the received HTML/XML data (e.g., the respective DOM tree) and extracts from the HTML/XML data the requested dynamic content in a machine-readable format. Such extracted machine-readable content data is then forwarded 2054, 2055, 2056 to the requesting entity R.

The skilled person will be able to understand the functioning of the set 420 of FIG. 4D. Nevertheless, a short explanation is given with regards to the XPath statement referred to as "pageLinks" (the last statement of set 420). In this statement, each XML/HTML-"h2" node is addressed. It will be filtered to only return the nodes that have a "span" node having the id "Weblink" as a child. From this node, the next sibling of node "div" is selected. Finally, a filter is applied to find nodes of type "a" somewhere in this selected node's subtree. From this "a" node the value of the "href" attribute is extracted as a "string".

The computer system may further include an error handling module. In case that the data retrieval request cannot be successfully processed, the error handling module can provide an error code which is generated based on a respective checkSuccessXpath statements as explained earlier. Examples for possible errors include but are not limited to: Unable to login; Unknown HTTP request exception while requesting site; Connection to scraped site cannot be established; Site URL could not be resolved; Problem with establishing a SSL connection to scraped site; Unexpected response from scraped site; Login to target site failed; Wrong parameters given in request; Unable to load user credentials for site to be scraped; Extraction failed; Scraper not registered; Missing required parameters; Scraped site didn't respond in time; Internal scraper server error; Internal scraper timeout error; Internal scraper no handler error; Internal scraper recipient failure error.

In one embodiment, a scraping script can include a JSON array of JSON objects. Each JSON object represents a single step. A subsequent step can take the response returned by the preceding step as input and behave as configured in its JSON object. In such a JSON object several properties from the below table 1 can be given. Each step has at least one of the properties url, urlFromXpath or urlFromHeader indicating where the request is sent to. All other fields are optional.

**Table 1: JSON object property examples**

| **Key** | **Type** | **Variables Allowed** | **Description** |
|---|---|---|---|
| url | String | Yes | URL to send the request to |
| urlFromXpath | String | No | Takes the body of the last response, applies the XPath and uses the first result as URL |
| urlFromHeader | String | No | Looks in the last response`s header for the given key and uses the result as URL |
| method | String | No | HttpMethod which is used for the request (defaults to GET) |
| urlParams | Object | Yes | The key-value items are transformed into GET params ({a:"1"} -> ...?a=1) |
| form Data | Object | Yes (keys & values) | The key-value items are transformed into HTTP body content form data |
| form DataFromXp ath | String | No | Takes the body of the last response and looks for the element specified by this XPath. In the first result, it looks for input elements with attributes name and value (<xpathValue>//input[@name][@value]). |
| | | | These values are overwritten by formData, if keys are the same (ignores case). |
| responseCookieF ilter | Array | No | By default, all cookies are looped through all requests. If this array is given, the response of the current request will only return the cookies with the cookie names which are in the list. If the list is empty, no cookies will be passed to the next request. |
| variablesTransfor mation | Object | No | String source, String regex and an optional Integer matchGroup. If a variable named like the value of source exists, the regex is applied to this value (Pattern/Match in Java). If a matchGroup is given, the specified group is used, otherwise the whole match result is stored in the new variable (i.e. X). Important: where variables are allowed, %varname% is replaced by the variable varname (case ignored) |
| isXml | Boolean | No | If set to true, the response is handled as XML instead of HTML. This means it's not cleaned but directly used to apply XPaths on it. It's optional and defaults to false. |
| xmlNamespaces | Object | No | This key-value store is used to declare namespaces for the DOM extraction. The key is the namespace prefix and value is the namespace uri. This is only necessary for XML files, as namespaces are cleared with HTML files beforehand. If the value of the key is a zero-length string, the URI is set as the default namespace for elements and types. By default, no namespaces are declared. |
| checkSuccessXp ath | String | Yes | XPath which is applied to the response's HTML to check for success |
| checkSuccessEx pectedValue | String | Yes | Is used to assert the evaluated result of the XPath. If it's equal, the response was successful (requires checkSuccessXpath) |

To summarize the approach for extracting dynamic content from websites, the system initially receives a data retrieval request which specifies the target website and the corresponding dynamic content data to be retrieved from the website. For example, a user wants to retrieve a train connection from A to B at a given time from a train connection service website TCS. The data retrieval request provides the initial information of the website TCS, start location A, destination location B and departure time t. In a first scraping script step, a corresponding request is submitted to the website TCS. As a response the website TCS may provide a URL where the data can be retrieved. In a next scraping script step, the system may send a request with the URL as a parameter and TCS may provide the respective content data as HMTL/XML data to the scraper.

A person skilled in the art can apply this approach to other scenarios, such as for example, a request to retrieve the number of inhabitants of a particular city from Wikipedia. In a first scraping script step, the city name is sent to the Wikipedia website and the URL of a page with information about the respective city is provided to the scraper as a response. The received URL is then used as parameter for the next scraping script launching a request to access the page under the received URL. This page includes the dynamic content data of the city and is provided as HTML/XML data including the number of inhabitants. A corresponding preconfigured XPath statement can then extract this information from the HTML/XML data. Dependent on the complexity of the website structure, scraping scripts can include a plurality of navigation steps to finally get access to the requested dynamic content data. FIG. 4D illustrates how the XPath statements 420 can then be used to retrieve all kinds of different content data from the received HTML/XML data.

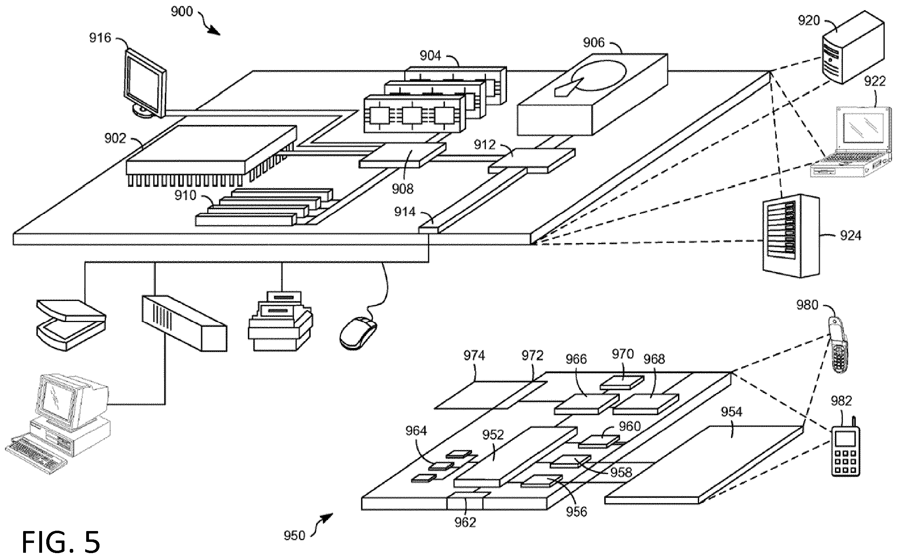

FIG. 5 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device 900 may correspond to the computer system 100 of FIG. 1. Computing device 950 is intended to represent various forms of mobile devices, such as personal digital assistants, cellular telephones, smart phones, and other similar computing devices. For example, computing device 950 may be used as a frontend by a user to interact with the computing device 900 (e.g., for example for providing the data retrieval request and for receiving the machine-readable content result. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid-state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952 that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or another similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer-implemented method (1000) for extracting dynamic content data (221) in a machine-readable format from a website (220) provided by a server wherein dynamic content data (221) relates to content data which is generated by the server in response to a request, the method comprising:
accessing (1100) configuration data reflecting the structure of the website (220), the configuration data including at least a website specific scraping script having instructions emulating a browser to automatically perform parameterized navigation steps on the website;
receiving (1200), via an interface (110), a data retrieval request (210) specifying the website (220) and corresponding dynamic content data (221) to be retrieved from the website (220);
triggering (1300) execution of the scraping script to access the dynamic content data (221), wherein the scraping script has a step description including one or more dynamic parameters with data from the data retrieval request specifying the dynamic content to be retrieved;
receiving (1400), from the website (220) in response to the scraping script execution, HTML/XML data representing the dynamic content data wherein the value of a particular dynamic parameter is the result value of a particular query;
providing (1500) the HTML/XML data to an XPath extraction module (150), wherein the XPath extraction module is pre-configured with the website specific XPath statements in accordance with the structure of the website (220); and
receiving (1600), from the XPath extraction module (150), machine-readable content data (222) extracted from the HTML/XML data;
wherein the data retrieval request (210) specifying the dynamic content data (221) includes one or more dynamic parameters of the scraping script that are replaced with values from preceding server responses extracted from previous navigation steps, the replaced one or more parameters to be used for the next navigation step, and further including one or more website specific XPath statements addressing said values.

2. The method of claim 1, wherein the website requires login credentials and wherein the data retrieval request further specifies user authentication data, the method further comprising:
providing (1210) the authentication data to an account database (230); and
in case of successful authentication of the user, receiving (1220) from the account database (230) the login credentials for the authenticated user in response to a credential request.

3. The method of claim 1 or 2, wherein the data retrieval request is buffered in a request queue (115) amongst a plurality of further data retrieval requests.

4. The method of any of the previous claims, further comprising:
in case of a login requirement for the website, determining (1240) a session ID for the data retrieval request to access the dynamic content data on the website.

5. The method of any of claim 4, wherein determining (1240) a session ID further comprises:
if an open session is available for the received data retrieval request, providing (1242) the session ID of the open session;
if no open session is available for the received data retrieval request, triggering (1243) execution of a pre-configured login script in accordance with the data retrieval request, and receiving (1244), in response to the executed login script, one or more cookies as the session ID.

6. The method of any of the previous claims, wherein the one or more parameterized navigation steps are enabled by the scraping script using results from preceding server responses allowing for dynamic navigation through the website and enabling the scraping script to work without relying on predefined URLs.

7. The method of any of the previous claims, wherein the data retrieval request includes at least one dynamic parameter leading to different content (221) generated by the website (220) in response to the execution of a particular scraping script step, wherein the dynamic parameter value is not known beforehand.

8. A computer program product that when loaded into a memory of a computing device and executed by at least one processor of the computing device executes the steps of the computer implemented method according to any of the previous claims.

9. A computer system (100) for extracting dynamic content data (221) from a website (220) in a machine-readable format, the system comprising:
an interface (110) configured to access configuration data (250) reflecting the structure of the website (220), the configuration data including at least a website specific scraping script having instructions emulating a browser to automatically perform parameterized navigation steps on the website, and further to receive a data retrieval request (210) specifying the website (220) and corresponding dynamic content data (221) to be retrieved from the website (220);
a scraper module (120) configured to provide the scraping script (2050) for execution wherein the scraping script is configured to perform one or more parameterized navigation steps on the website (220) to access the dynamic content data (221);
a script module (140) configured to trigger execution of the scraping script wherein the scraping script has a step description including one or more dynamic parameters with data from the data retrieval request specifying the dynamic content to be retrieved, and to receive, from the website (220) in response to the scraping script execution, HTML/XML data representing the dynamic content data wherein the value of a particular dynamic parameter is the result value of a particular query; and
an XPath extraction module (150), wherein the XPath extraction module is pre-configured with the website specific XPath statements in accordance with the structure of the website (220) to extract machine-readable content data (222) from the HTML/XML data;
wherein the data retrieval request (210) specifying the dynamic content data (221) includes one or more dynamic parameters of the scraping script that are replaced with values from preceding server responses extracted from previous navigation steps, the replaced one or more parameters to be used for the next navigation step, and further including one or more website specific XPath statements addressing said values.

10. The system (100) of claim 9, further comprising:
a request queue (115) configured to buffer the data retrieval request (210) amongst a plurality of further data retrieval requests.

11. The system (100) of claim 9 or 10, wherein the website requires login credentials and wherein the data retrieval request (2010) further specifies user authentication data (2020), further comprising:
a session management module (130) configured to determine a session ID for the data retrieval request to access the dynamic content data on the website;

12. The system (100) of claim 11, the interface (110) being communicatively coupled with an account database (230), and being further configured to provide the authentication data (2020) to the account database (230), and in case of successful authentication of the user, to receive from the account database (230) the login credentials (2023) for the authenticated user in response to a credential request (2022).

13. The system (100) of claims 11 or 12, wherein the session management module (130) is further configured to:
check if an open session is available for the received data retrieval request;
if an open session is available, provide the session ID of the open session to the scraper module (120);
if no open session is available for the received data retrieval request, trigger the execution of a pre-configured login script (2040) by the script module (140) in accordance with the data retrieval request (2010), and provide one or more cookies (2042), received in response to the executed login script, as the session ID to the scraper module (120).

14. The system (100) of any of claims 9 to 13, wherein the computer system (100) is further configured to deploy configuration data to the computer system modules.

15. The system (100) of any of claims 9 to 14, wherein the one or more parameterized navigation steps are enabled by the scraping script using results from preceding server responses allowing for dynamic navigation through the website and enabling the scraping script to work without relying on predefined URLs.

## Patentansprüche

1. Computerimplementiertes Verfahren (1000) zum Extrahieren von dynamischen Inhaltsdaten (221) in einem maschinenlesbaren Format aus einer Website (220), die mittels eines Servers bereitgestellt wird, wobei sich die dynamischen Inhaltsdaten (221) auf Inhaltsdaten beziehen, die mittels des Servers als Reaktion auf eine Anforderung erzeugt werden, das Verfahren umfassend:
Zugreifen auf (1100) Konfigurationsdaten, die die Struktur der Website (220) widerspiegeln, wobei die Konfigurationsdaten mindestens ein websitenspezifisches Scraping-Skript aufweisen, das Instruktionen aufweist, die einen Browser emulieren, um parametrisierte Navigationsschritte auf der Website automatisch durchzuführen;
Empfangen (1200), über eine Schnittstelle (110), einer Datenabrufanforderung (210), die die Website (220) und entsprechende dynamische Inhaltsdaten (221), spezifiziert, die von der Website (220) abgerufen werden sollen;
Auslösen (1300) der Ausführung des Scraping-Skripts, um auf die dynamischen Inhaltsdaten (221) zuzugreifen, wobei das Scraping-Skript eine Schrittbeschreibung aufweist, die einen oder mehrere dynamische Parameter mit Daten aus der Datenabrufanforderung einschließt, die den abzurufenden dynamischen Inhalt spezifizieren;
Empfangen (1400), von der Website (220), als Reaktion auf die Scraping-Skriptausführung, von HTML/XML-Daten, die die dynamischen Inhaltsdaten darstellen, wobei der Wert eines speziellen dynamischen Parameters der Ergebniswert einer speziellen Abfrage ist;
Bereitstellen (1500) der HTML/XML-Daten an ein XPath-Extraktionsmodul (150), wobei das XPath-Extraktionsmodul mit den websitenspezifischen XPath-Anweisungen gemäß der Struktur der Website (220) vorkonfiguriert ist; und
Empfangen (1600), von dem XPath-Extraktionsmodul (150), von maschinenlesbaren Inhaltsdaten (222), die aus den HTML/XML-Daten extrahiert sind;
wobei die Datenabrufanforderung (210), die die dynamischen Inhaltsdaten (221) spezifiziert, einen oder mehrere dynamische Parameter des Scraping-Skripts umfasst, die mit Werten aus vorhergehenden Serverreaktionen ersetzt werden, die aus vorherigen Navigationsschritten extrahiert werden, wobei der ersetzte eine oder die mehreren Parameter für den nächsten Navigationsschritt verwendet werden, und weiterhin eine oder mehrere website-spezifische XPath-Anweisungen umfasst, die die Werte adressieren.

2. Verfahren nach Anspruch 1, wobei die Website Anmeldedaten erfordert und wobei die Datenabrufanforderung ferner Benutzerauthentifizierungsdaten spezifiziert, das Verfahren ferner umfassend:
Bereitstellen (1210) der Authentifizierungsdaten an eine Benutzerkontodatenbank (230); und
im Fall einer erfolgreichen Authentifizierung des Benutzers, Empfangen (1220), von der Benutzerkontodatenbank (230), der Anmeldedaten für den authentifizierten Benutzer als Reaktion auf eine Berechtigungsnachweisanforderung.

3. Verfahren nach Anspruch 1 oder 2, wobei die Datenabrufanforderung in einer Anforderungswarteschlange (115) unter einer Vielzahl von weiteren Datenabrufanforderungen gepuffert wird.

4. Verfahren nach einem der vorstehenden Ansprüche, ferner umfassend:
im Fall einer Anmeldeerfordernis für die Website, Bestimmen (1240) einer Sitzungs-ID für die Datenabrufanforderung, um auf die dynamischen Inhaltsdaten auf der Website zuzugreifen.

5. Verfahren nach einem von Anspruch 4, wobei das Bestimmen (1240) einer Sitzungs-ID ferner umfasst:
falls eine offene Sitzung für die empfangene Datenabrufanforderung verfügbar ist, Bereitstellen (1242) der Sitzungs-ID der offenen Sitzung;
falls keine offene Sitzung für die empfangene Datenabrufanforderung verfügbar ist, Auslösen (1243) der Ausführung eines vorkonfigurierten Anmeldeskripts gemäß der Datenabrufanforderung, und Empfangen (1244), als Reaktion auf das ausgeführte Anmeldeskript, von einem oder mehreren Cookies als die Sitzungs-ID.

6. Verfahren nach einem der vorstehenden Ansprüche, wobei der eine oder die mehreren parametrisierten Navigationsschritte mittels des Scraping-Skripts aktiviert werden, unter Verwendung von Ergebnissen aus vorhergehenden Serverreaktionen, die eine dynamische Navigation durch die Website erlauben und das Scraping-Skript aktivieren, ohne auf vordefinierte URLs angewiesen zu sein, zu arbeiten.

7. Verfahren nach einem der vorstehenden Ansprüche, wobei die Datenabrufanforderung mindestens einen dynamischen Parameter einschließt, der zu einem unterschiedlichen Inhalt (221) führt, der mittels der Website (220) als Reaktion auf die Ausführung eines speziellen Scraping-Skriptschritts erzeugt wird, wobei der dynamische Parameterwert zuvor nicht bekannt ist.

8. Computerprogrammprodukt, das, wenn es in einen Speicher einer Computervorrichtung geladen und mittels mindestens eines Prozessors der Computervorrichtung ausgeführt wird, die Schritte des computerimplementierten Verfahrens nach einem der vorstehenden Ansprüche ausführt.

9. Computersystem (100) zum Extrahieren von dynamischen Inhaltsdaten (221) aus einer Website (220) in einem maschinenlesbaren Format, das System umfassend:
eine Schnittstelle (110), die konfiguriert ist, um auf Konfigurationsdaten (250) zuzugreifen, die die Struktur der Website (220) widerspiegeln, wobei die Konfigurationsdaten mindestens ein websitenspezifisches Scraping-Skript aufweisen, das Instruktionen aufweist, die einen Browser emulieren, um parametrisierte Navigationsschritte auf der Website automatisch durchzuführen, und ferner um eine Datenabrufanforderung (210) zu empfangen, die die Website (220) und entsprechende dynamische Inhaltsdaten (221) spezifiziert, die von der Website (220) abgerufen werden sollen;
ein Scraper-Modul (120), das konfiguriert ist, um das Scraping-Skript (2050) für die Ausführung bereitzustellen, wobei das Scraping-Skript konfiguriert ist, um einen oder mehrere parametrisierte Navigationsschritte auf der Website (220) durchzuführen, um auf die dynamischen Inhaltsdaten (221) zuzugreifen;
ein Skriptmodul (140), das konfiguriert ist, um die Ausführung des Scraping-Skripts auszulösen, wobei das Scraping-Skript eine Schrittbeschreibung aufweist, einschließlich eines oder mehrerer dynamischer Parameter mit Daten aus der Datenabrufanforderung, die den abzurufenden dynamischen Inhalt spezifizieren, und um von der Webseite (220) als Reaktion auf die Scraping-Skriptausführung HTML/XML-Daten zu empfangen, die die dynamischen Inhaltsdaten darstellen, wobei der Wert eines speziellen dynamischen Parameters der Ergebniswert einer speziellen Abfrage ist; und
ein XPath-Extraktionsmodul (150), wobei das XPath-Extraktionsmodul mit den websitenspezifischen XPath-Anweisungen gemäß der Struktur der Website (220) vorkonfiguriert ist, um maschinenlesbare Inhaltsdaten (222) aus den HTML/XML-Daten zu extrahieren;
wobei die Datenabrufanforderung (210), die die dynamischen Inhaltsdaten (221) spezifiziert, einen oder mehrere dynamische Parameter des Scraping-Skripts umfasst, die mit Werten aus vorhergehenden Serverreaktionen ersetzt werden, die aus vorherigen Navigationsschritten extrahiert werden, wobei der ersetzte eine oder die mehreren Parameter für den nächsten Navigationsschritt verwendet werden, und weiterhin eine oder mehrere website-spezifische XPath-Anweisungen umfasst, die die Werte adressieren.

10. System (100) nach Anspruch 9, ferner umfassend:
eine Anforderungswarteschlange (115), die konfiguriert ist, um die Datenabrufanforderung (210) unter einer Vielzahl von weiteren Datenabrufanforderungen zu puffern.

11. System (100) nach Anspruch 9 oder 10, wobei die Website Anmeldedaten erfordert und wobei die Datenabrufanforderung (2010) ferner Benutzerauthentifizierungsdaten (2020) spezifiziert, ferner umfassend:
ein Sitzungsverwaltungsmodul (130), das konfiguriert ist, um eine Sitzungs-ID für die Datenabrufanforderung zu bestimmen, um auf die dynamischen Inhaltsdaten auf der Website zuzugreifen;

12. System (100) nach Anspruch 11, wobei die Schnittstelle (110) mit einer Benutzerkontodatenbank (230) kommunikativ gekoppelt ist, und ferner konfiguriert ist, um die Authentifizierungsdaten (2020) für die Benutzerkontodatenbank (230) bereitzustellen, und um im Fall einer erfolgreichen Authentifizierung des Benutzers, die Anmeldedaten (2023) für den authentifizierten Benutzer von der Benutzerkontodatenbank (230) als Reaktion auf eine Berechtigungsnachweisanforderung (2022) zu empfangen.

13. System (100) nach Anspruch 11 oder 12, wobei das Sitzungsverwaltungsmodul (130) ferner konfiguriert ist zum:
Überprüfen, ob eine offene Sitzung für die empfangene Datenabrufanforderung verfügbar ist;
falls eine offene Sitzung verfügbar ist, Bereitstellen der Sitzungs-ID der offenen Sitzung an das Scraper-Modul (120);
falls keine offene Sitzung für die empfangene Datenabrufanforderung verfügbar ist, Auslösen der Ausführung eines vorkonfigurierten Anmeldeskripts (2040) mittels des Skriptmoduls (140) gemäß der Datenabrufanforderung (2010), und Bereitstellen eines oder mehrerer Cookies (2042), die als Reaktion auf das ausgeführte Anmeldeskript empfangen werden, als die Sitzungs-ID an das Scraper-Modul (120).

14. System (100) nach einem der Ansprüche 9 bis 13, wobei das Computersystem (100) ferner konfiguriert ist, um Konfigurationsdaten an die Computersystemmodule auszubringen.

15. System (100) nach einem der Ansprüche 9 bis 14, wobei der eine oder die mehreren parametrisierten Navigationsschritte mittels des Scraping-Skripts aktiviert werden, unter Verwendung von Ergebnissen aus vorhergehenden Serverreaktionen, die eine dynamische Navigation durch die Website erlauben und das Scraping-Skript aktivieren, ohne auf vordefinierte URLs angewiesen zu sein, zu arbeiten.

## Revendications

1. Procédé mis en oeuvre par ordinateur (1000) destiné à l'extraction des données de contenu dynamique (221) dans un format lisible par machine à partir d'un site Web (220) fourni par un serveur dans lequel des données de contenu dynamique (221) se rapportent à des données de contenu qui sont générées par le serveur en réponse à une demande, le procédé comprenant :
l'accès (1100) aux données de configuration reflétant la structure du site Web (220), les données de configuration comportant au moins un script de moissonnage spécifique au site Web ayant des instructions émulant un navigateur pour réaliser automatiquement des étapes de navigation paramétrées sur le site Web ;
la réception (1200), par l'intermédiaire d'une interface (110), d'une demande de récupération de données (210) spécifiant le site Web (220) et les données de contenu dynamique correspondantes (221) à récupérer à partir du site Web (220) ;
le déclenchement (1300) de l'exécution du script de moissonnage pour accéder aux données de contenu dynamique (221), dans lequel le script de moissonnage a une description d'étape comportant un ou plusieurs paramètres dynamiques avec des données provenant de la demande de récupération de données spécifiant le contenu dynamique à récupérer ;
la réception (1400), à partir du site Web (220) en réponse à l'exécution du script de moissonnage, des données HTML/XML représentant les données de contenu dynamique dans lequel la valeur d'un paramètre dynamique particulier est la valeur de résultat d'une requête particulière ;
la fourniture (1500) des données HTML/XML à un module d'extraction XPath (150), dans lequel le module d'extraction XPath est préconfiguré avec les instructions XPath spécifiques au site Web conformément à la structure du site Web (220) ; et
la réception (1600), à partir du module d'extraction XPath (150), des données de contenu lisibles par machine (222) extraites à partir des données HTML/XML ;
dans lequel la demande de récupération de données (210) spécifiant les données de contenu dynamique (221) comporte un ou plusieurs paramètres dynamiques du script de moissonnage qui sont remplacés par des valeurs provenant des réponses du serveur précédentes extraites des étapes de navigation précédentes, le ou les paramètres remplacés à utiliser pour la prochaine étape de navigation, et comportant en outre une ou plusieurs instructions XPath spécifiques au site Web adressant lesdites valeurs.

2. Procédé selon la revendication 1, dans lequel le site Web nécessite des informations de connexion et dans lequel la demande de récupération de données spécifie en outre des données d'authentification d'utilisateur, le procédé comprenant en outre :
la fourniture (1210) des données d'authentification à une base de données de comptes (230) ; et
en cas d'authentification réussie de l'utilisateur, la réception (1220) à partir de la base de données de comptes (230) des informations de connexion de l'utilisateur authentifié en réponse à une demande d'informations d'identification.

3. Procédé selon la revendication 1 ou 2, dans lequel la demande de récupération de données est mise en mémoire tampon dans une file d'attente de demandes (115) parmi une pluralité d'autres demandes de récupération de données.

4. Procédé selon l'une quelconque des revendications précédentes, comprenant en outre :
en cas d'exigence de connexion pour le site Web, la détermination (1240) d'un ID de session pour la demande de récupération de données afin d'accéder aux données de contenu dynamique sur le site Web.

5. Procédé selon l'une quelconque de la revendication 4, dans lequel la détermination (1240) d'un ID de session comprend en outre :
si une session ouverte est disponible pour la demande de récupération de données reçue, la fourniture (1242) de l'ID de session de la session ouverte ;
si aucune session ouverte n'est disponible pour la demande de récupération de données reçue, le déclenchement (1243) de l'exécution d'un script de connexion préconfiguré conformément à la demande de récupération de données, et la réception (1244), en réponse au script de connexion exécuté, d'un ou plusieurs témoins de connexion comme ID de session.

6. Procédé selon l'une quelconque des revendications précédentes, dans lequel la ou les étapes de navigation paramétrées sont activées par le script de moissonnage à l'aide des résultats provenant des réponses du serveur précédentes permettant une navigation dynamique à travers le site Web et permettant au script de moissonnage de fonctionner sans compter sur des URL prédéfinies.

7. Procédé selon l'une quelconque des revendications précédentes, dans lequel la demande de récupération de données comporte au moins un paramètre dynamique menant à un contenu différent (221) généré par le site Web (220) en réponse à l'exécution d'une étape de script de moissonnage particulière, dans lequel la valeur de paramètre dynamique n'est pas connue à l'avance.

8. Produit-programme informatique qui, lorsqu'il est chargé dans une mémoire d'un dispositif informatique et exécuté par au moins un processeur du dispositif informatique, exécute les étapes du procédé mis en oeuvre par ordinateur selon l'une quelconque des revendications précédentes.

9. Système informatique (100) destiné à l'extraction des données de contenu dynamique (221) à partir d'un site Web (220) dans un format lisible par machine, le système comprenant :
une interface (110) configurée pour accéder aux données de configuration (250) reflétant la structure du site Web (220), les données de configuration comportant au moins un script de moissonnage spécifique au site Web ayant des instructions émulant un navigateur pour réaliser automatiquement des étapes de navigation paramétrées sur le site Web, et en outre pour recevoir une demande de récupération de données (210) spécifiant le site Web (220) et les données de contenu dynamique correspondantes (221) à récupérer à partir du site Web (220) ;
un module de moissonnage (120) configuré pour fournir le script de moissonnage (2050) à exécuter dans lequel le script de moissonnage est configuré pour réaliser une ou plusieurs étapes de navigation paramétrées sur le site Web (220) pour accéder aux données de contenu dynamique (221) ;
un module de script (140) configuré pour déclencher l'exécution du script de moissonnage, le script de moissonnage ayant une description d'étape comportant un ou plusieurs paramètres dynamiques avec des données provenant de la demande de récupération de données spécifiant le contenu dynamique à récupérer, et pour recevoir, à partir du site Web (220) en réponse à l'exécution du script de moissonnage, des données HTML/XML représentant les données de contenu dynamique dans lequel la valeur d'un paramètre dynamique particulier est la valeur de résultat d'une requête particulière ; et
un module d'extraction XPath (150), dans lequel le module d'extraction XPath est préconfiguré avec les instructions XPath spécifiques au site Web conformément à la structure du site Web (220) pour extraire des données de contenu lisibles par machine (222) à partir des données HTML/XML ;
dans lequel la demande de récupération de données (210) spécifiant les données de contenu dynamique (221) comporte un ou plusieurs paramètres dynamiques du script de moissonnage qui sont remplacés par des valeurs provenant des réponses du serveur précédentes extraites des étapes de navigation précédentes, le ou les paramètres remplacés à utiliser pour la prochaine étape de navigation, et
comportant en outre une ou plusieurs instructions XPath spécifiques au site Web adressant lesdites valeurs.

10. Système (100) selon la revendication 9, comprenant en outre :
une file d'attente de demandes (115) configurée pour mettre en mémoire tampon la demande de récupération de données (210) parmi une pluralité de demandes de récupération de données supplémentaires.

11. Système (100) selon la revendication 9 ou 10, dans lequel le site Web nécessite des informations de connexion et dans lequel la demande de récupération de données (2010) spécifie en outre des données d'authentification d'utilisateur (2020), comprenant en outre :
un module de gestion de session (130) configuré pour déterminer un ID de session pour la demande de récupération de données afin d'accéder aux données de contenu dynamique sur le site Web ;

12. Système (100) selon la revendication 11, l'interface (110) étant couplée en communication avec une base de données de comptes (230), et étant en outre configurée pour fournir les données d'authentification (2020) à la base de données de comptes (230), et en cas d'une authentification réussie de l'utilisateur, pour recevoir à partir de la base de données de comptes (230) les informations de connexion (2023) pour l'utilisateur authentifié en réponse à une demande d'informations d'identification (2022).

13. Système (100) selon la revendication 11 ou 12, dans lequel le module de gestion de session (130) est en outre configuré pour :
vérifier si une session ouverte est disponible pour la demande de récupération de données reçue ;
si une session ouverte est disponible, fournir l'ID de session de la session ouverte au module de moissonnage (120) ;
si aucune session ouverte n'est disponible pour la demande de récupération de données reçue, déclencher l'exécution d'un script de connexion préconfiguré (2040) par le module de script (140) conformément à la demande de récupération de données (2010), et fournir un ou plusieurs témoins de connexion (2042), reçus en réponse au script de connexion exécuté, en tant qu'ID de session au module de moissonnage (120).

14. Système (100) selon l'une quelconque des revendications 9 à 13, dans lequel le système informatique (100) est en outre configuré pour déployer des données de configuration sur les modules du système informatique.

15. Système (100) selon l'une quelconque des revendications 9 à 14, dans lequel la ou les étapes de navigation paramétrées sont activées par le script de moissonnage à l'aide des résultats des réponses du serveur précédentes permettant une navigation dynamique à travers le site Web et permettant au script de moissonnage de fonctionner sans compter sur des URL prédéfinies.
